Europäisches Patentamt

(19) European Patent Office

Office européen des brevets

(11) Numéro de publication: **0 003 243**

**A1**

(12) **DEMANDE DE BREVET EUROPEEN**

(21) Numéro de dépôt: **78200374.3**

(22) Date de dépôt: **18.12.78**

(51) Int. Cl.²: **G 03 B 15/00**
**G 03 B 17/24**

(30) Priorité: 20.01.78 FR 7801592
20.10.78 FR 7829886

(43) Date de publication de la demande:
08.08.79 Bulletin 79/16

(84) Etats contractants désignés:
BE CH DE GB IT LU NL SE

(71) Demandeur: **Paltz, Roger Georges**
**2 Allée des Tilleuls**
**Le Clos Vimont 77 Lesigny(FR)**

(72) Inventeur: **Paltz, Roger Georges**
**2 Allée des Tilleuls**
**Le Clos Vimont 77 Lesigny(FR)**

(74) Mandataire: **Vander-Heym, Roger**
**172 Boulevard Voltaire**
**F-75011 Paris(FR)**

(54) Perfectionnements aux dispositifs photographiques de contrôle d'identité.

㊼ Perfectionnements aux dispositifs photographiques de contrôle d'identité, du genre de ceux consistant à photographier successivement la personne qui remet les documents puis les documents caractérisés en ce que le dispositif comporte un appareil de prise de vues constitué par une caméra usuelle du commerce.

Fig.2

EP 0 003 243 A1

## Perfectionnements aux dispositifs photographiques de contrôle d'identité.

La présente invention est relative à des perfectionnements aux dispositifs photographiques de contrôle d'identité.

On sait que, lors de la remise d'un chèque, ou analogue, le bénéficiaire contrôle l'identité du tireur.

La généralisation de ce moyen de paiement et l'augmentation constante des chéquiers volés ont rendu illusoires les moyens de contrôle traditionnels qui, dans la plupart des cas, consistaient à vérifier la similitude existant entre les mentions portées sur le chèque et celles de la carte d'identité. En effet, il est bien connu qu'il est toujours très difficile pour le bénéficiaire d'être certain que la personne qui remet le chèque et qui présente une pièce d'identité est la même que la titulaire réelle de la pièce d'identité.

Pour remédier à ces inconvénients, on a imaginé un dispositif permettant de photographier simultanément la personne qui remet le chèque et la pièce d'identité présentée ainsi que ledit chèque.

0003243

L'expérience a montré qu'un tel dispositif avait un pouvoir dissuasif très important.

Ces dispositifs associent deux appareils de prise de vues, l'objectif de l'un étant horizontal et dirigé vers le tireur tandis que celui de l'autre est vertical et est dirigé vers les documents à photographier. Les deux images sont reçues sur le même support et le dispositif comporte un système de déviation optique approprié.

Il s'avère qu'un tel dispositif est onéreux puisqu'il est double et, pour réduire le prix de revient, on a été amené à simplifier le dispositif optique.

Ainsi, l'ouverture de l'objectif est relativement grande de l'ordre de 2,8 et l'appareil ne comporte pas de diaphragme automatique.

La simplicité des moyens techniques mis en oeuvre permet d'obtenir une épreuve photographique satisfaisante lorsque le niveau d'éclairement du local est élevé et constant.

Cependant, les dispositifs connus du type ci-dessus ne peuvent pas être utilisés dans les locaux éclairés alternativement en lumière naturelle et en lumière artificielle.

Le dispositif de l'invention qui remédie à ces inconvénients met en oeuvre un procédé photographique différent permettant d'utiliser un appareil de prise de vues du commerce bénéficiant donc pour un prix réduit, en raison de sa grande diffusion, de tous les avantages de la technique en la matière ( objectif à grande ouverture, diaphragme automatique,etc.).

0003243

Par le brevet Allemand N° 713 879 on connaît un dispositif utilisant deux systèmes optiques impliquant la construction d'un appareil de prise de vues spécifique donc onéreux.

Selon l'invention, l'appareil de prise de vues est constitué par une caméra usuelle du commerce.

L'invention sera mieux comprise par la description qui va suivre faite en se référant aux dessins annexés à titre d'exemple indicatif seulement, sur lesquels :

La figure 1 est une vue en perspective du dispositif de l'invention.

Les figures 2 et 3 sont des vues schématiques en coupe verticale et à plus grande échelle montrant le fonctionnement du dispositif.

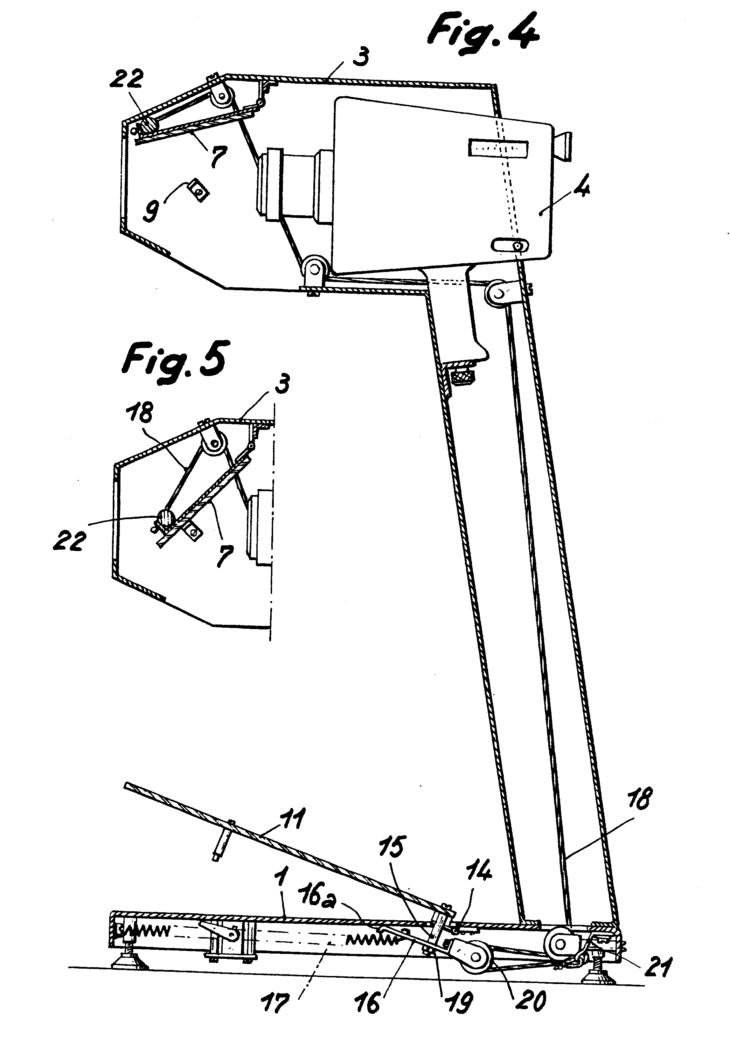

La figure 4 est une vue en coupe, à grande échelle, montrant une variante de réalisation de la figure 2.

La figure 5 est une vue partielle, analogue à celle 4, montrant le miroir en position d'utilisation.

En se reportant aux dessins, on voit que l'appareil se compose d'une embase ou socle 1, d'un montant 2 et d'une tête 3.

Selon l'invention, la tête 4 renferme une caméra 4, d'un type usuel du commerce, telle qu'une caméra "super-huit ", susceptible de photographier vue par vue, ladite tête présentant deux fenêtres 5 et 6 dont l'une est située dans le prolongement de l'objectif tandis que l'autre est décalée vers le bas d'environ 90° par rapport à la première.

De la façon connue, les documents à photographier sont placés sur le socle 1.

Le procédé de l'invention consiste à effectuer deux prises de vues séparées l'une pour photographier le tireur et l'autre pour photographier les documents.

Ce procédé permet donc l'utilisation d'une caméra unique et,notamment, l'emploi d'une caméra permettant d'obtenir de bonnes perfomances sans pour cela augmenter le prix de revient de l'appareil par rapport à ceux existants.

Pour photographier les documents, il faut placer l'image de ceux-ci selon l'axe de l'objectif de la caméra.

Un tel résultat peut être obtenu par un renvoi optique constitué par un miroir 7, ou un prisme à réflexion totale ( non représenté).

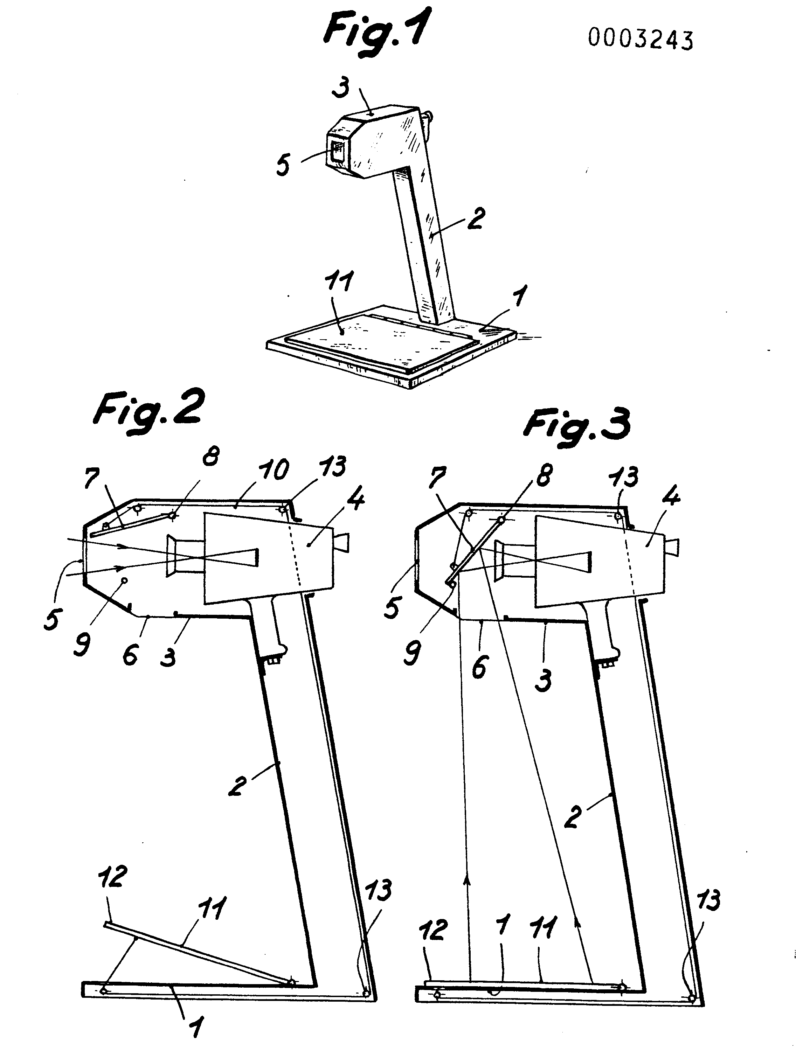

Pour photographier le tireur le miroir est escamoté (figure 2) mais il est placé devant l'objectif de la caméra pour photographier les documents ( figure 3).

Selon un mode de réalisation, le miroir 7 est articulé par son bord 8, à l'instar d'un volet, à l'intérieur de la tête 3 et il est constamment soumis à l'action d'un ressort qui tend à le placer devant l'objectif en appui contre une butée 9,ledit miroir formant alors avec l'axe de l'objectif de la caméra un angle sensiblement égal à 45° ( figure 3).

0003243

Selon un mode de réalisation,le miroir 7 est articulé par son bord 8, à l'instar d'un volet, à l'intérieur de la tête 3 et il est constamment soumis à l'action d'un ressort qui tend à le placer devant l'objectif en appui contre une butée 9, ledit miroir formant alors avec l'axe de l'objectif de la caméra un angle sensiblement égal à 45° ( figure 3).

Le bord opposé du volet est relié à l'extrémité d'un câble 10, souple et inextensible, de commande. De cette façon, en tirant sur le câble 10 on provoque l'escamotage du miroir.

Selon une autre caractéristique de l'invention, le pivotement du miroir est commandé par un couvre-documents 11 réalisé en une matière transparente, articulé sur le socle 1 par un de ses côtés et constamment soumis à l'action d'un ressort qui tend à le maintenir relevé.

L'extrémité libre du câble 10 est reliée au bord relevé 12 du couvre-documents.

Lorsque, par une action manuelle, on rabat le couvre-documents sur le socle 1, on détend le câble 10, qui s'enroule sur des poulies 13, et on détermine ainsi le rabattement du miroir qui pivote sous l'action de son ressort.

En relâchant le couvre-documents, celui-ci se soulève, sous l'action de son ressort de rappel, en exerçant une traction sur le câble 10 ce qui a pour effet d'escamoter le miroir, la force du ressort du couvre-documents étant, à cet effet, supérieure à celle du ressort du miroir.

Selon une variante le couvre-documents 11 présente à proximité de son axe d'articulation 14, sur le socle 1, un doigt 15 s'étendant à l'intérieur dudit socle et comportant à son extrémité libre une barrette 16 soumise à l'action d'un ressort 17 qui a pour effet de maintenir ledit couvre-documents relevé.

L'extrémité 16a de la barrette 16 peut prendre appui sous ledit socle 1 pour limiter le soulèvement du couvre-documents.

L'extrémité du doigt 15 est reliée au miroir 7 par l'entremise d'un câble 18.

La barrette 16 est fixée à l'extrémité du doigt 15 à l'aide d'un écrou 19, ledit doigt présentant, à cet effet, une partie filetée traversant une lumière de ladite barrette.

Selon un mode de réalisation, la barrette 16 présente à l'opposé de son extrémité 16a une poulie mobile 20 sur laquelle s'enroule le câble 18 dont l'extrémité est fixée au socle 1 par l'entremise d'une patte 21. Par la torsion de la patte 21 il est possible de modifier le point d'accrochage du câble 18 et, par suite, d'adapter la longueur du câble au dispositif de façon à ce que le miroir repose sur sa butée 9 lorsque le couvre-documents est appliqué contre le socle 1.

La poulie mobile 20, qui permet d'adapter la course de l'extrémité du doigt 15 à celle du miroir peut être remplacée par un système mouflé connu.

De préférence, une masselotte 22 est prévue le long du bord antérieur du miroir pour faciliter son pivotement lorsque le câble 18 est détendu.

Selon un autre mode de réalisation, il est possible de simplifier le dispositif en supprimant le miroir et en faisant pivoter la caméra 4 autour d'un axe horizontal. Une telle modification entraînerait celle de la tête 3 mais est à la portée de l'homme de l'art.

On pourrait aussi utiliser le couvre-documents 11 pour commander le pivotement de la caméra 4 en accrochant l'extrémité supérieure du câble 18 à ladite caméra. Naturellement, il y aurait lieu de déterminer la position de l'axe d'articulation de la caméra par rapport à son centre de gravité de façon à ce que le pivotement du couvre-documents détermine celui de ladite caméra, et de prévoir une butée analogue à celle 9 pour limiter le pivotement de ladite caméra. Il n'est pas nécessaire de décrire en détail une telle réalisation, l'homme de l'art pouvant adapter, à la caméra 4, le dispositif décrit ci-dessus à propos du miroir 7.

Revendications.

1. Perfectionnements aux dispositifs photographiques du genre de ceux comportant un dispositif optique escamotable permettant de photographier successivement deux objets placés dans des angles différents, caractérisés en ce que le dispositif comporte une caméra usuelle du commerce.

2. Perfectionnements aux dispositifs photographiques selon la revendication 1, caractérisés en ce que l'escamotage du dispositif optique ( 7) est commandé par le pivotement d'un couvre-documents (11).

3. Perfectionnements aux dispositifs photographiques selon l'une quelconque des revendications 1 et 2 et comportant un dispositif optique escamotable constitué par un miroir pivotant, caractérisés en ce que le miroir (7) est constamment soumis à l'action d'un ressort qui tend à l'appliquer, devant l'objectif de la caméra (4), contre une butée ( 9).

4. Perfectionnements aux dispositifs photographiques selon l'une quelconque des revendications 2 et 3, caractérisés en ce que le dispositif optique ( 7) est relié mécaniquement au couvre-documents ( 11),de telle sorte que le pivotement de l'un de ces organes détermine celui de l'autre.

5. Perfectionnements aux dispositifs photographiques selon la revendication 4,caractérisés en ce que le couvre-documents est constamment soumis à l'action d'un ressort qui tend à le maintenir soulevé, la force dudit ressort étant supérieure à celle de rappel du dispositif optique ( 7).

6.    Perfectionnements aux dispositifs photographiques de contrôle d'identité selon les revendications 1 et 4, caractérisés en ce que le couvre-documents ( 11 ) présente, à proximité de son axe d'articulation, une extension (15) s'étendant dans le socle de l'appareil et constamment soumise à l'action d'un ressort ( 17) maintenant ledit couvre-documents relevé, en exerçant une traction sur un câble (18) ayant pour effet de maintenir le miroir pivotant escamoté.

7.    Perfectionnements aux dispositifs photographiques de contrôle d'identité selon la revendication 6, caractérisés en ce que le pivotement du couvre-documents à l'encontre de son ressort de rappel a pour effet de détendre le câble précité et de permettre, par gravité, la rotation du miroir qui se place devant l'objectif de la caméra.

8.    Perfectionnements aux dispositifs photographiques de contrôle d'identité selon la revendication 7, caractérisés en ce que le pivotement du miroir est favorisé par une masselotte (22) située le long de son bord antérieur.

9.    Perfectionnements aux dispositifs photographiques de contrôle d'identité selon l'une quelconque des revendications 6 à 8, caractérisés en ce que des moyens sont prévus pour adapter la course de l'extrémité du doigt à celle du miroir.

10.   Perfectionnements aux dispositifs photographiques de contrôle d'identité selon l'une quelconque des revendications 6 à 9, caractérisés en ce que l'une des extrémités du câble est reliée au socle selon un point de fixation dont la position est réglable.

11. Perfectionnements aux dispositifs photographiques de contrôle d'identité selon la revendication 1, caractérisés en ce qu'on supprime le miroir et en ce qu'on fait pivoter la caméra à l'intérieur de la tête du dispositif.

12. Perfectionnements aux dispositifs photographiques de contrôle d'identité selon la revendication 11, caractérisés en ce que le pivotement de la caméra est commandé par celui du couvre- documents.

13. Perfectionnements aux dispositifs photographiques de contrôle d'identité selon la revendication 12, caractérisés en ce que le dispositif décrit dans les revendications 6,7,9 et 10 est utilisé pour commander le pivotement de la caméra.

# Fig.1

0003243

**3**
**5**
**2**
**11**
**1**

# Fig.2

7 8 10 13 4
5 9 6 3
2
12 11 1 13

# Fig.3

7 8 13 4
5 9 6 3
2
12 1 11 13

0003243

**Fig.4**

**Fig.5**

| Catégorie | DOCUMENTS CONSIDERES COMME PERTINENTS | | CLASSEMENT DE LA DEMANDE (Int. Cl.²) |
|---|---|---|---|
| | Citation du document avec indication, en cas de besoin, des parties pertinentes | Revendication concernée | |
| DA | DE - C - 713 879 (LYTAX-WERKE G.m.b.H.)<br><br>* Page 2, lignes 57-101; figures 1,2 *<br><br>-- | 1 | G 03 B 15/00<br>17/24 |
| A | DE - C - 934 986 (L. DIETZEL)<br><br>* Page 2, lignes 9-27; figures *<br><br>-- | 1 | |
| A | DE - C - 597 371 (PHOTO-MANUFAKTUR R. BAIER)<br><br>* Page 2, lignes 5-55; figures 1-5 *<br><br>-- | 1 | **DOMAINES TECHNIQUES RECHERCHES (Int. Cl.²)**<br><br>G 03 B 15/00<br>15/08<br>G 07 C 11/00<br>G 07 F 17/40<br>G 03 B 27/32 |
| A | US - A - 3 816 842 (T.J. GLAROS)<br><br>* Page 7, lignes 35-54; figures 1-10 *<br><br>---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 04-04-1979 | BOEYKENS |

OEB Form 1503.1 06.78